# EUROPEAN PATENT SPECIFICATION

(11) **EP 3 897 022 B1**
(45) Date of publication and mention of the grant of the patent: **24.06.2026**
(21) Application number: 18943025.9
(22) Date of filing: 13.12.2018
(51) Int. Cl.: H04W 16/14

(54) **BASE STATION, TERMINAL, COMMUNICATION SYSTEM AND COMMUNICATION CONTROL METHOD**
BASISSTATION, ENDGERÄT, KOMMUNIKATIONSSYSTEM UND KOMMUNIKATIONSSTEUERUNGSVERFAHREN
STATION DE BASE, DISPOSITIF, SYSTÈME DE COMMUNICATION ET PROCÉDÉ DE COMMANDE DE COMMUNICATION

(43) Date of publication of application: 20.10.2021
(73) Proprietor: NTT DoCoMo, Inc., Tokyo 100-6150 (JP)
(72) Inventor: HARADA, Hiroki, Tokyo 100-6150 (JP); MURAYAMA, Daisuke, Tokyo 100-6150 (JP); NAGATA, Satoshi, Tokyo 100-6150 (JP)
(74) Representative: Hoffmann Eitle
(86) International application number: PCT/JP2018/045984
(87) International publication number: WO 2020/121502

(56) References cited:
- WO-A1-2017/022778
- WO-A1-2017/171422
- JP-A- 2015 070 342
- US-A1- 2016 278 118
- US-A1- 2018 167 959
- US-A1- 2018 219 642
- US-A1- 2018 302 926

## Description

### Technical Field

The present invention relates to a base station, a terminal, a communication system and a communication control method.

### Background Art

In a Universal Mobile Telecommunications System (UMTS) network, successor systems of Long Term Evolution (LTE) has been studied (for example, see Non-Patent Literature (hereinafter referred to as "NPL") 1). Examples of successor systems of LTE include the systems called LTE-Advanced (LTE-A), Future Radio Access (FRA), 5th generation mobile communication system (5G), 5G plus (5G+), New Radio Access Technology (New-RAT or NR), and the like.

Moreover, for example, a future radio communication system for achieving a broader bandwidth and a higher speed based on 5G has been studied.
PL 1 relates to partial subframe transmission in licensed assisted access.
PL 2 relates to downlink control information transmission,
PL 3 relates to communication between a terminal and a base station using a control channel.

### Citation List

### Non-Patent Literature

NPL 1
3GPP TSG RAN WG1 Meeting #95, "RAN 1 Chairman's Notes," November 2018

### Patent Literature

PL1
   US 2018/302926 A1
PL2
   US 2018/167959 A1
PL3
   JP 2015 070342 A

### Summary of Invention

### Technical Problem

However, in the future radio systems, for example, there is room for consideration regarding a technique for sharing specific frequency (for example, unlicensed frequency) between communication carriers (operators).

An object of the present invention is to improve efficiency of frequency sharing technology.

### Solution to Problem

The present invention is defined by the independent claims. Preferred embodiments are defined by the dependent claims. Further aspects are provided for facilitating the understanding of the invention.

### Advantageous Effects of Invention

According to one aspect of the present invention, improving the efficiency of frequency sharing technology is possible.

### Brief Description of Drawings

FIG. 1 illustrates exemplary frequency sharing;
FIG. 2 illustrates exemplary synchronization and cooperation among operators;
FIG. 3 illustrates exemplary base station sharing among operators;
FIG. 4 is a block diagram illustrating an exemplary configuration of a radio communication system according to Embodiment 1;
FIG. 5 is a block diagram illustrating an exemplary configuration of a base station according to embodiment 1;
FIG. 6 is a block diagram illustrating an exemplary configuration of a terminal according to embodiment 1;
FIG. 7 illustrates exemplary frequency sharing among a plurality of operators in a shared spectrum according to embodiment 1;
FIG. 8 is a block diagram illustrating an exemplary configuration of a radio communication system according to embodiment 2;
FIG. 9 illustrates an exemplary combination of DU configuration and MT configuration;
FIG. 10 illustrates an exemplary association between a DU resource and a prioritized operator according to embodiment 2;
FIG. 11 illustrates an exemplary configuration of a radio communication system according to embodiment 3; and
FIG. 12 illustrates an exemplary hardware configuration of a base station, a terminal, and an IAB node.

### Description of Embodiments

Hereinafter, embodiments of the present invention will be described in detail with reference to the accompanying drawings.

### (Embodiment 1) (part of the claimed invention)

In 3GPP (e.g., Release 16), in addition to communication using licensed frequency (sometimes referred to as a licensed spectrum or a licensed band), communication using "unlicensed frequency (sometimes referred to as an unlicensed spectrum or an unlicensed band)" (e.g., sometimes referred to as an NR unlicensed (NR-U) has been considered. In the unlicensed frequency, a method of coexistence between different RATs or between different operators is specified, for example. In one example, in the unlicensed frequency, the NR-U and Wi-Fi (registered trademark), the NR-U and LTE License-Assisted Access (LTE-LAA), or the NR-U of operator A and the NR-U of operator B may co-exist. For the unlicensed frequency, 2.4GHz, 5 to 7GHz or 57 to 71GHz may be used, for example.

Note that, "operator" means, for example, a communication carrier using the RAT. Different RATs may be used for different operators or may be used by the same operator. In the following description, the "operator" may mean RAT used by the communication carrier or a communication facility (e.g., base station) used in the RAT as well as the "communication carrier."

In the future radio systems, in addition to the unlicensed frequency, communication using a "shared frequency (shared spectrum)" sharing frequencies among operators using the same RAT will be studied, for example.

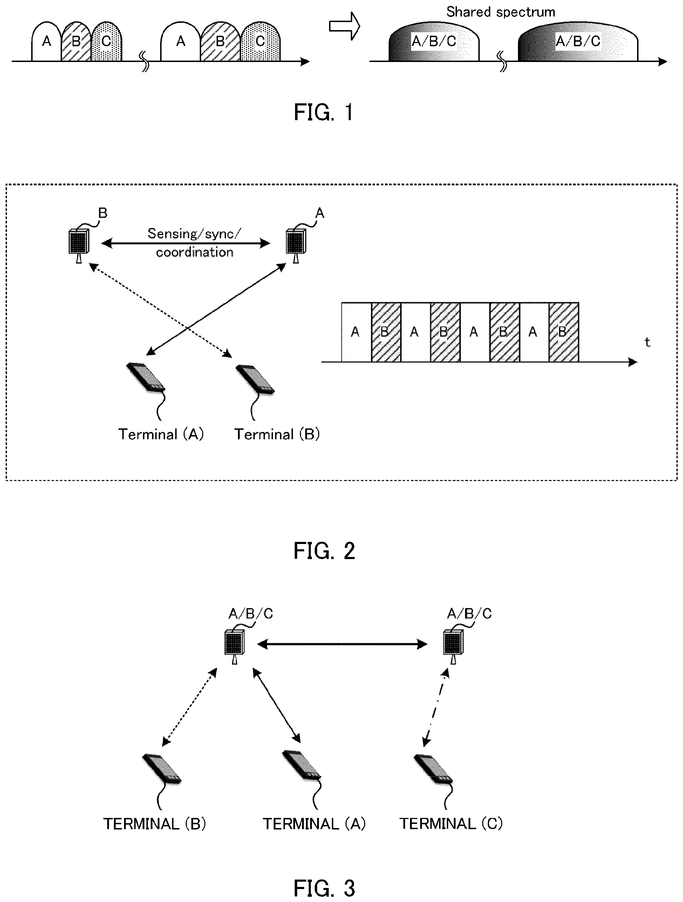

FIG. 1 illustrates an exemplary frequency sharing among a plurality of operators (e.g., operators A, B and C) using the shared frequency. For example, in the shared frequency, operators A, B and C use a common frequency among the operators as illustrated on the right side of FIG. 1, rather than using individually allocated frequencies for each operator as illustrated on the left side of FIG. 1. As illustrated in FIG. 1, using the shared frequency may enable each operator to use wideband frequency compared to the case where the frequencies are allocated individually. To the shared frequency, 2.3GHz or 3.5GHz or the like may be used, for example.

The method in which the operators coexist (i.e., the method in which the frequency is shared) may differ between the unlicensed frequency and the shared frequency.

In the unlicensed frequency, for example, information cannot be shared among different RATs in some cases. Thus, for example, an operator using each RAT performs sensing of the unlicensed frequency before transmitting a signal and transmits the signal using a resource which is not used by the operator using the other RAT. Note that, the sensing described above may be referred to as a Listen Before Talk (LBT) or a Clear Channel Assessment (CCA). In addition, a communication method using the unlicensed frequency may be referred to as a Licensed Assisted Access (LAA).

On the other hand, in the shared frequency, for example, when the information can be shared as among the operators using the same RAT, time synchronization among the operators (hereinafter, also abbreviated as simply "synchronization") can be introduced. Introducing the time synchronization can improve utilization efficiency of the shared frequency compared with the unlicensed frequency.

Hereinafter, a description will be given of a communication method using the shared frequency.

### [Inter-Operator Synchronization]

In the shared frequency, the time synchronization may be introduced, for example, among a plurality of operators (e.g., operators A and B), as illustrated in FIG. 2. In other words, a plurality of operators may cooperate to share the shared frequency.

For example, when the time synchronization among operators is introduced in the shared frequency, an operator that can preferentially use the resource (hereinafter, referred to as a "prioritized operator") is set for respective resources (e.g., slots) in the shared frequency. For example, resources in the shared frequency may be allocated quasi-statically (semi-statically) to operators. The prioritized operator can preferentially use the allocated resource. Such resource is referred to as a "prioritized resource" hereinafter for convenience.

Furthermore, for example, when some prioritized resources are left unused by the prioritized operator, the resources may be used by another operator that is different from the prioritized operator (hereinafter referred to as a "non-prioritized operator"). For example, in the example illustrated in FIG. 2, operator A may use, in addition to the prioritized resources allocated to operator A, unused resources among the prioritized resources allocated to operator B. By contrast, operator B may use, in addition to the prioritized resources allocated to operator B, unused resources among the prioritized resources allocated to operator A. The use of unused resources by such a non- prioritized operator is sometimes referred to as "opportunistic use" for convenience.

Besides, for example, in the shared frequency, a transmission signal of the prioritized operator and a transmission signal of the non-prioritized operator may be spatially multiplexed (Spatial Division Multiplexing (SDM)). By way of example, in the prioritized resource (e.g., time resource) used by the prioritized operator, the non-prioritized operator may use a beam (i.e., unused beam) that is different from a beam (i.e., spatial resource) that is used by the prioritized operator. The SDM can orthogonalize the interference among a plurality of operators and improves the frequency utilization efficiency of the shared frequency.

Thus, in the shared frequency, the frequency utilization efficiency can be improved by introducing the time synchronization among operators and using the unused resources by the non-prioritized operator taking an opportunity (i.e., opportunistically).

### [Base Station Sharing Among Operators]

In the shared frequency, for example, as illustrated in FIG. 3, a base station (sometimes referred to as gNB, for example) may be shared among a plurality of operators (e.g., operators A, B and C).

By sharing the base stations among a plurality of operators, for example, the above-mentioned processing relating to the time synchronization (or coordination) among the operators is completed within the base station, and communication between the base stations can be reduced, which enables reducing the complexity of the system.

In one example, the shared frequency may be a frequency used in case of disasters or the like (e.g., frequency for a public safety). In this case, sharing base stations among a plurality of operators can reduce the cost of installing base stations compared with the case where each operator installs a base station, individually.

The communication mode using the shared frequency has been described above.

Here, an operation in which the non-prioritized operator uses the prioritized resource for other operators will be considered.

For example, each operator monitors (i.e., performs sensing) a resource other than the prioritized resource for the operator ((i.e., the prioritized resource for another operator) to determine whether or not the resource can be used.

When the monitored resource is used by another operator (e.g., the prioritized operator), the operator cannot use the resource; thus, the greater the number of prioritized resources of other operators to be monitored in the shared frequency, the more likely the monitoring processing may be wasted.

On the other hand, when the operator determines not to monitor the resource other than the prioritized resource so as to reduce wasteful monitoring processing, an opportunity for using the prioritized resource for another operator is lost, and thus, the frequency utilization efficiency is reduced.

Therefore, in one aspect of the present disclosure, a method capable of improving processing efficiency and frequency utilization efficiency of an operator in the shared frequency will be described.

### [Configuration of Radio Communication System]

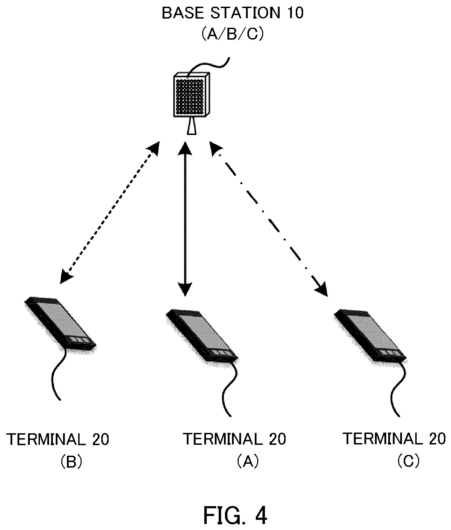

FIG. 4 illustrates an exemplary configuration of a radio communication system according to the present embodiment. The radio communication system illustrated in FIG. 4 includes, for example, base station 10 and terminals 20. In FIG. 4, as an example, the operators A, B and C share base station 10. Terminals 20 belonging to the respective operators A, B, and C are wirelessly connected (i.e., access) to base station 10.

Since the configuration of the radio communication system illustrated in FIG.4 is an merely example, the numbers of base stations 10, terminals 20, and operators are not limited to the configuration illustrated in FIG. 4. Base station 10 may also be provided for respective operators instead of sharing among the operators. In this case, for example, as illustrated in FIG. 2, the time synchronization may be carried out among base stations 10 of the respective operators.

### [Configuration of Base Station 10]

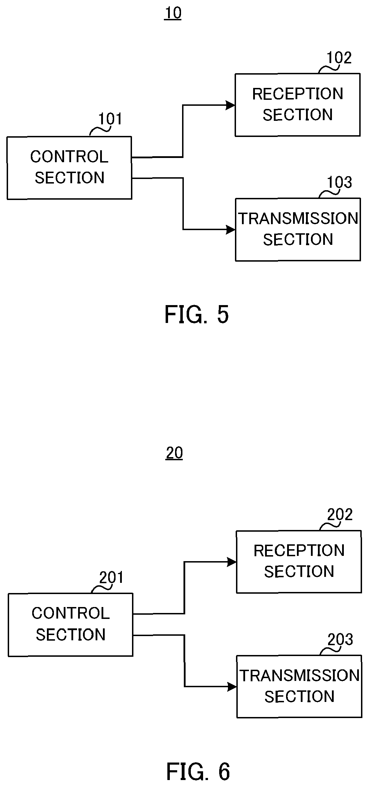

FIG. 5 is a block diagram illustrating an exemplary configuration of base station 10 according to the present embodiment. Base station 10 includes, for example, control section 101, reception section 102, and transmission section 103.

Control section 101 controls reception processing in reception section 102 and transmission processing in transmission section 103. Further, for example, control section 101 controls (i.e., performs scheduling) allocation of a resource used in the signal to be transmitted and received by terminal 20 in at least one of a downlink (DL) and an uplink (UL).

In addition, for example, control section 101 configures, for each terminal 20, an area (referred to as, for example, a "search space" or a "search space set") that is a candidate for a resource to be used for transmitting control information indicating the scheduling result. By way of example, the search space is an area in which terminal 20 monitors (i.e., blindly decodes) the control information. Control section 101 may configure the search space for each operator sharing the shared frequency, for example.

Further, control section 101 determines the presence or absence of the monitoring in the search space (e.g., on and off) with respect to terminal 20. Note that, a unit of terminal 20 for determining the presence or absence of the monitoring of the search space may be one terminal 20 or may be a group of a plurality of terminals 20. The group of the plurality of terminals 20 may be, for example, a group of terminals 20 belonging to one operator or a group of terminals 20 belonging to a plurality of operators.

Reception section 102 receives an UL signal transmitted from terminal 20. For example, reception section 102 receives the UL signal under the control of control section 101. The UL signal includes, for example, UL control information, UL data, or a reference signal. The UL control information may also be referred to as, for example, a Physical Uplink Control Channel (PUCCH) signal or Uplink Control Information (UCI). Further, the UL-data may also be referred to as, for example, a Physical Uplink Shared Channel (PUSCH) signal.

Transmission section 103 transmits a DL signal for terminal 20 to terminal 20. For example, transmission section 103 transmits the DL signal under the control of control section 101. The DL signal includes, for example, DL control information, DL data, or the reference signal. The DL control information may include, for example, information indicating the resource allocated by control section 101 or the information indicating the presence or absence of the monitoring in the search space. The DL control information may also be referred to as, for example, a Physical Downlink Control Channel (PDCCH) signal or Downlink Control Information (DCI). The DL data may also be referred to as, for example, a Physical Downlink Shared Channel (PDSCH) signal.

In addition, the DL control information may also be notified to terminal 20 by, for example, higher-layer signaling or dynamic signaling such as the DCI or Medium Access Control Control Element (MAC CE). The higher-layer signaling may also be referred to as, for example, Radio Resource Control (RRC) signaling or a higher-layer parameter.

### [Configuration of Terminal 20]

FIG. 6 is a block diagram illustrating an exemplary configuration of terminal 20 according to the present embodiment. Terminal 20 includes, for example, control section 201, reception section 202, and transmission section 203.

Control section 201 controls, for example, reception processing in reception section 202 and transmission processing in transmission section 203. In one example, control section 201 determines the search space including control information (e.g., a PDCCH signal) relating to resource allocation in the shared frequency based on the information notified from base station 10.

Further, control section 201 monitors the search space to detect the control information addressed to terminal 20. Control section 201 then controls at least one of reception processing of the DL data and transmission processing of the UL data based on the detected control information (e.g., resource allocation information).

Reception section 202 receives a DL signal transmitted from base station 10. For example, reception section 202 receives the DL signal under the control of control section 201.

Transmission section 203 transmits an UL signal to base station 10. For example, transmission section 203 transmits the UL signal under the control of control section 201.

### [Method for Monitoring Search Space]

Next, an exemplary method for monitoring the search space at terminal 20 will be described.

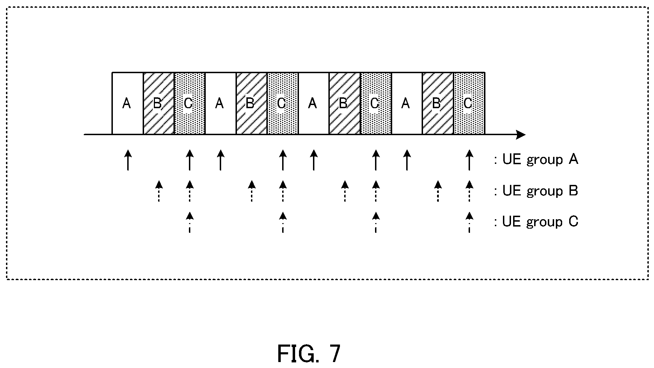

FIG. 7 illustrates exemplary frequency sharing among a plurality of operators in the shared spectrum.

In FIG. 7, for example, the resources in the shared frequency (e.g., time resources such as slots) are respectively allocated to operators A, B and C, sequentially. In other words, in FIG. 7, the resources of the shared frequency are configured as the prioritized resources for operators A, B and C for every three resources. Note that, the configuration of the prioritized resources is not limited to the example illustrated in FIG. 7. By way of example, the prioritized resources of respective operators may be configured periodically or non-periodically. Further, the number of prioritized resources may be the same or different among the operators.

Further, in FIG. 7, base station 10 groups terminals 20 belonging to, for example, respective operators A, B and C into one group per operator (e.g., UE group A, UE group B, and UE group C).

For example, base station 10 configures the search space to be used for transmitting control information relating to respective resources for each of the prioritized resources of three operators A, B, and C (referred to as resources A, B, and C, for example).

Here, in one example, FIG. 7 illustrates an example in which a signal (i.e., a traffic) to be transmitted and received in operators A and B is present, while a signal to be transmitted and received in operator C is absent. In other words, in FIG. 7, resources A and B may be used by operators A and B (i.e., the prioritized operators). On the other hand, in FIG. 7, resource C has no possibility of being used by operator C (i.e., the prioritized operator).

In this case, base station 10 allocates each resource to terminals 20 respectively belonging to the operators A and B. For example, base station 10 allocates resource A or resource C to terminal 20 belonging to operator A. Further, for example, base station 10 allocates resource B or resource C to terminal 20 belonging to operator B. For example, resource C that is unused by operator C may be allocated to any one of operators A and B (i.e., the non- prioritized operators).

In addition, base station 10 determines the search space to be monitored (i.e., the presence or absence of monitoring in each search space) for terminals 20 respectively belonging to the operators A, B, and C (i.e., the groups). Base station 10 instructs each terminal 20 on the configured search space to be monitored. For example, base station 10 may transmit, to each terminal 20, information indicating the presence or absence of monitoring of the search space corresponding to each resource (hereinafter, referred to as monitoring information).

In FIG. 7, base station 10 instructs terminal 20 belonging to operator A (i.e., UE group A) to monitor the search space for resource C in addition to the search space for prioritized resource A. Similarly, for example, base station 10 instructs terminal 20 belonging to operator B (i.e., UE group B) to monitor the search space for resource C in addition to the search space for prioritized resource B. On the other hand, base station 10 instructs terminal 20 belonging to operator C (i.e., UE group C) to monitor the search space for prioritized resource C.

In other words, in FIG. 7, base station 10 instructs terminals 20 of operators A and B to monitor the search space including the control information relating to the prioritized resource corresponding to operator C that is different from operators A and B (i.e., monitoring: present). On the other hand, in FIG. 7, base station 10 does not instruct terminal 20 of operator C to monitor the search space including the control information relating to the prioritized resources corresponding to operator A or B that is different from operator C (i.e., monitoring: absent).

Thus, in FIG. 7, in prioritized resource C, terminals 20 of operators A, B and C monitor the search space.

For example, the monitoring information may indicate whether the monitoring of the search space corresponding to each resource is present (monitoring: on) or the monitoring is absent (monitoring: off). Alternatively, the monitoring information may indicate, for the search space for each resource, a period during which terminal 20 turns on (or turns off) monitoring. Note that, the period for turning on monitoring (or period for turning off), for example, may be defined by a specification.

Further, the monitoring information notified to each terminal 20 may indicate the presence or absence of the monitoring in the search space corresponding to the prioritized resources of the plurality of operators. In this case, for example, the monitoring information indicates that the monitoring in the search space corresponding to the prioritized resource for the operator to which each terminal 20 belongs is configured to be ON. Alternatively, the monitoring information notified to each terminal 20 may indicate the presence or absence of the monitoring in the search space corresponding to the prioritized resource for another operator that is different from the operator to which terminal 20 belongs.

Terminal 20 determines the search space for a monitoring object based on the control information instructed (i.e., notified) from base station 10. Terminal 20 monitors the determined search space to detect control information (e.g., resource allocation information) addressed to terminal 20.

In the example illustrated in FIG. 7, terminal 20 of operator A monitors the search space corresponding to prioritized resource C of operator C in addition to the search space corresponding to prioritized resource A of operator A. On the other hand, in the example illustrated in FIG. 7, terminal 20 of operator A does not monitor the search space corresponding to prioritized resource B of operator B.

Similarly, terminal 20 of operator B, as with terminal 20 of operator A, monitors the search space with respect to an available resource (resources B and C in FIG. 7) and does not monitor the search space with respect to an unavailable resource (resources A in FIG. 7) in the shared frequency.

The monitoring processing allows terminals 20 of operators A and B to use unused prioritized resources of other operators in addition to the prioritized resource. Further, by the monitoring processing, terminals 20 of operators A and B do not monitor the search space corresponding to the prioritized resource used by the other operator, and thus, unnecessary monitoring processing can be reduced.

Further, in the example illustrated in FIG. 7, operator C has no signal to be transmitted and received (i.e., no traffic). Thus, terminal 20 of operator C monitors the search space corresponding to prioritized resource C of operator C and does not monitor the search space corresponding to the prioritized resources of other operators. By the monitoring processing, terminal 20 of operator C having no traffic does not monitor the search space corresponding to the other operators, and thus, unnecessary monitoring processing can be reduced.

Thus, in the present embodiment, base station 10 controls, for example, configuration related to use by the second radio apparatus (e.g., terminal 20 of another operator) of a radio resource (e.g., the prioritized resource) allocated to the first radio apparatus (e.g., terminal 20 of each operator). For example, base station 10 controls configuration of the monitoring (e.g., on or off of the monitoring) by terminal 20 of another operator with respect to the control information (e.g., the resource allocation information) associated with the radio resource allocated to terminal 20 (e.g., the prioritized resource) of a certain operator. Base station 10 then transmits the information relating to the above-mentioned configuration (e.g., the information indicating whether the monitoring of the search space is present) to each terminal 20.

Terminal 20 receives information indicating configuration (e.g., the presence or absence of the monitoring of the search space) related to use of the prioritized resource allocated to another radio apparatus (e.g., terminal 20 of another operator). Terminal 20 then controls the use of the prioritized resource based on the received information.

The processing allows base station 10 to dynamically switch the presence or absence of the monitoring of the search space with respect to terminals 20 belonging to the respective operators according to a usage status of resources by the plurality of operators in the shared frequency. For example, terminal 20 monitors the search space for resources that may be used by terminal 20 in the shared frequency while not monitoring the search space for resources that cannot be used by terminal 20.

Thus, according to the present embodiment, when the prioritized resource for another operator is left unused, the possibility in which terminal 20 can use the prioritized resource is increased, and thus, the frequency utilization efficiency of the shared frequency can be improved. Further, according to the present embodiment, when the prioritized resource for another operator is used, terminal 20 does not monitor the search space for the prioritized resource, and thus, unnecessary monitoring processing can be reduced.

Thus, according to the present embodiment, the efficiency of frequency sharing technology can be improved.

Note that, base station 10 may scramble the control information including the monitoring information (e.g., a PDCCH signal or DCI) by, for example, a Radio Network Temporary Identifier (RNTI) based on information (e.g., identification information or identifier) capable of identifying an operator (or a UE group). The operator-identifiable information may be, for example, information (e.g., PLMN ID) that identifies a Public Land Mobile Network (PLMN) corresponding to each operator.

Scrambling allows terminal 20 to extract the monitoring information addressed to the group to which terminal 20 belongs (e.g., operator or UE group) from the signal received from base station 10. In other words, a plurality of terminals 20 belonging to each group can identify the control information scrambled by the identifier corresponding to the group.

Further, the monitor information may also be notified from base station 10 to terminal 20 by either or both of the higher-layer signaling and the dynamic signaling (e.g., DCI or MAC CE). In the claimed invention, said monitor information from base station to terminal is notified using both the higher-layer signaling and the DCI.

In the claimed invention, in each operator, information indicating a candidate search space corresponding to a prioritized resource for another operator is notified from base station 10 to terminal 20 through the higher layer signaling. Furthermore, in the claimed invention, base station 10 dynamically notifies terminal 20 of information indicating the presence or absence of the monitoring in each of the search space candidates by using the dynamic signaling. This notification can reduce an amount of information for the dynamic signaling instructing (indicating) the presence or absence of the search space for a monitoring object.

Alternatively, in an example not forming part of the claimed invention, in each operator, the information indicating the search space candidate corresponding to the preferred resource for another operator may be dynamically notified from base station 10 to terminal 20 together with the information indicating the presence or absence of the monitoring in each of the search space candidates. Both of these notifications, i.e. either one of the claimed notification and the unclaimed example notification, notification, flexibly switches the search space for the monitoring object of terminal 20.

### (Embodiment 2) (not part of the claimed invention)

In the present embodiment, a case will be described where a technique of Integrated Access Backhaul (IAB) that integrates an access link and a backhaul link is applied in the shared frequency.

### [Configuration of Radio Communication System]

In IAB, a radio node (hereinafter referred to as an "IAB node") forms a radio access link with a terminal (or referred to as a UE) and forms a radio backhaul link with at least one of another IAB node and a radio base station.

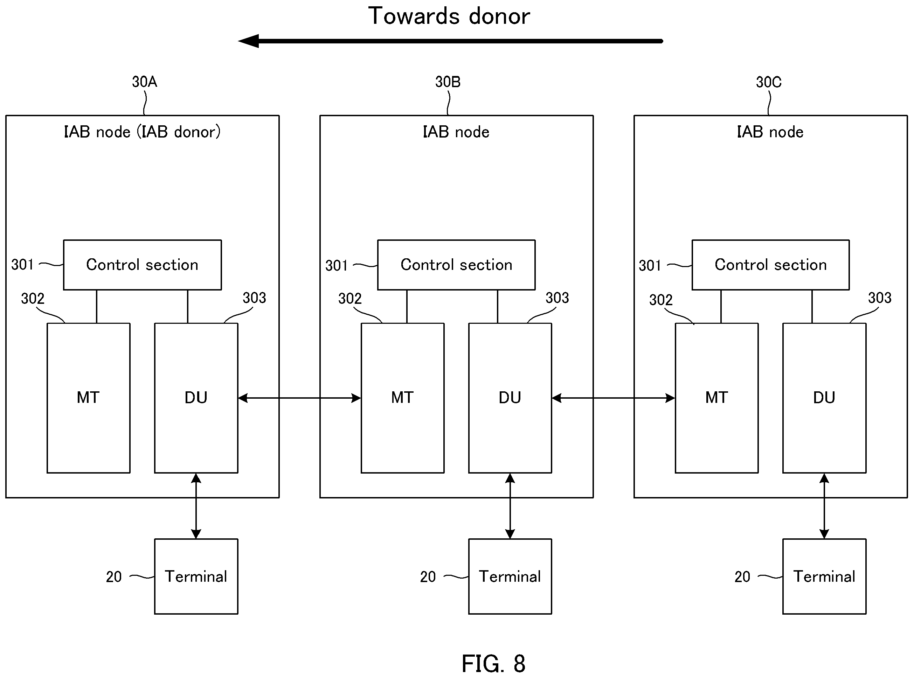

FIG. 8 illustrates an exemplary configuration of a radio communication system according to the present embodiment. Note that, a terminal according to the present embodiment will be described with reference to FIG. 6 because the terminal has a common basic configuration with terminal 20 according to Embodiment 1.

The radio communication system illustrated in FIG. 8 includes IAB nodes 30A to 30C and terminals 20 (UEs).

IAB nodes 30A to 30C form cells in which IAB nodes 30 can perform radio communication, respectively. In other words, IAB node 30 has a base station function. Terminal 20 in the cell can be wirelessly connected (in other words, access) to IAB node 30 forming the cell.

Further, each of IAB nodes 30A to 30C is connected to another IAB node 30, for example, by radio communication. In one example, in FIG. 8, IAB node 30B is connected to IAB node 30A. IAB node 30C is connected to IAB node 30B.

Moreover, for example, IAB-node 30A may be connected to a Core Network (CN) through a Fiber Backhaul (BH). In this instance, IAB node 30Amay be referred to as an "IAB donor. "

Hereinafter, upstream IAB node 30 (e.g., in a direction approaching the IAB donor) from certain IAB node 30 is referred to as a "parent node," and downstream IAB node 30 (e.g., in a direction away from the IAB donor) is referred to as a "child node".

For example, the parent node of IAB node 30B is IAB node 30A, and the parent node of IAB node 30C is IAB node 30B. In addition, for example, the child node of IAB node 30B is IAB node 30C, and the child node of IAB node 30A is IAB node 30B.

In FIG. 8, although the number of IAB nodes 30 is three, and the number of terminals 20 is three, the number of IAB nodes 30 and the number of terminals 20 included in the radio communication system illustrated in FIG. 8 are not limited to the example illustrated in FIG. 8. The number of parent nodes for one IAB node 30 may be two or more, and the number of child nodes for one IAB node 30 may be two or more. Further, IAB node 30 serving as a child node may be connected to IAB node 30C.

### [Exemplary IAB node Configuration]

As illustrated in FIG. 8, IAB node 30 includes control section 301, Mobile-Termination (MT) 302, and Distributed Unit (DU) 303.

### Control section 301 controls MT 302 and DU 303.

MT302 may have, for example, a function corresponding to a terminal with respect to the parent node. For example, MT 302 may have a function of the same transmission processing (i.e., UL processing) and reception processing (i.e., DL processing) as terminal 20 described in Embodiment 1 (e.g., see FIG. 6).

DU303 may have, for example, a function corresponding to a base station with respect to the child node. For example, DU 303 may have a function of the same transmission processing (i.e., DL processing) and reception processing (i.e., UL processing) as base station 10 described in embodiment 1 (e.g., see FIG. 5).

For example, IAB node 30B illustrated in FIG. 8 is connected to DU 303 of IAB node 10A that is the parent node by MT 302. Further, for example, IAB node 30B illustrated in FIG. 8 is connected to terminal 20 or MT 302 of IAB node 30C that is the child node by DU 303.

In view of MT 302 of IAB node 30, for a linkage between IAB node 30 and the parent node (hereinafter referred to as a "parent link"), information (also referred to as a MT configuration) indicating the following time resources (time-domain resource) may be instructed from the parent node to the child node.
- DL time resource: time resource used for DL (hereinafter referred to as "DL")
- UL time resources: time resource used for UL (hereinafter referred to as "UL")
- Flexible time resource: time resource used for DL or UL (hereinafter referred to as "F")

In addition, in view of DU 303 of IAB node 30, for a linkage between IAB node 30 and the child node or terminal 20 (hereinafter, referred to as "child link"), IAB node 30 includes information (also referred to as a DU configuration) indicating the following types of time resources.
- DL time resource (hereinafter referred to as "DL")
- UL time resource (hereinafter referred to as "UL")
- Flexible time resource (hereinafter referred to as "F")
- Not-available time resource: resource not used for communication of the child link of DU (hereinafter referred to as "NA")

Further, the DL time resource (DL), UL time resource (UL), and Flexible time resource (F) of the child link of DU 303 individually belong to one of the following two categories.
- Hard: time resource corresponding to "Hard" is always available for the child link of DU.
- Soft: possibility (availability) for the child link of DU of time resources corresponding to "Soft" is explicitly and/or implicitly controlled by the parent node.

For example, the time resource configured to "Soft" is dynamically switched as to whether DU 303 is available or unavailable (NA) by IAB node 30 that is the parent node. For example, IAB node 30 that is the parent node notifies the child node of information indicating that DU 303 is available (e.g., indicated as available (IA)) or information indicating that DU 303 is unavailable (e.g., indicated as not available(INA)) with respect to the time resource to which "Soft" has been configured.

For example, each IAB node 30 may acquire the information (e.g., the DU configuration) indicating of the time resource for DU 303 from the parent node or the IAB donor (or referred to as a Central Unit (CU)).

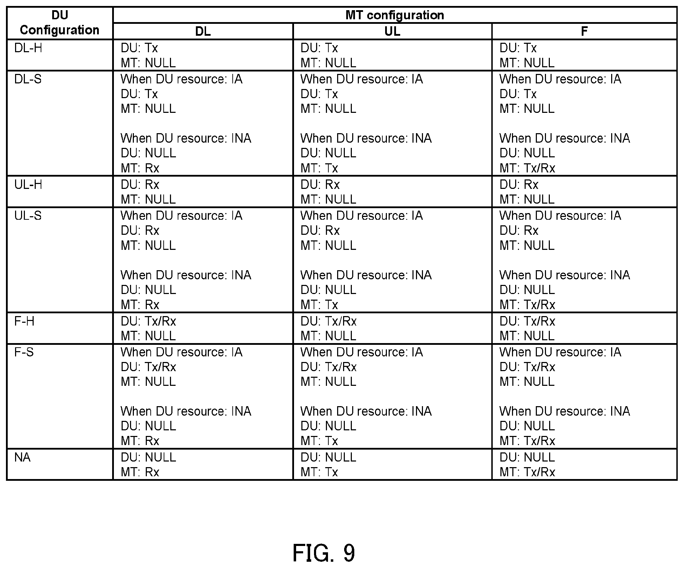

FIG. 9 illustrates an exemplary combination of a resource configuration of DU 303 (e.g., a DU configuration) and a resource configuration of MT 302 (e.g., a MT configuration) in Time Division Multiplexing (TDM) operations. Note that, the present embodiment is not limited to the TDM operation. For example, the present embodiment may be applied to a SDM operation as well as the TDM.

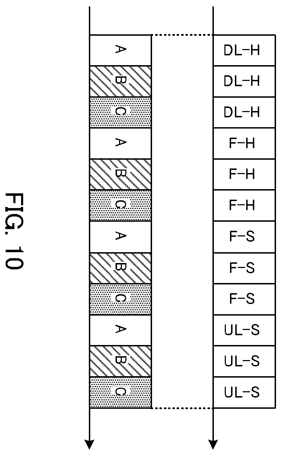

Further, FIG. 10 illustrates, as an example, an association between time resources (e.g., slots) in the shared frequency and types of DU 303 (a DU configuration) configured for the respective time resources. As illustrated in FIG. 10, any of DU configuration (DL-H, DL-S, UL-H, UL-S, F-H, F-S, or NA) illustrated in FIG. 9 is configured for each time resource.

For example, IAB node 30 or terminal 20 that is the child node, determines the use of the time resource based on the relationship between time resource and the resource configuration of DU 303 illustrated in FIG. 10, and the resource configuration of MT 302 (for example, the MT configuration illustrated in FIG. 9).

In the present embodiment, IAB node 30 further notifies the child node or terminal 20 of information relating to an operator that can preferentially use each time resource. In other words, IAB node 30 (DU 303) transmits information indicating the association between a plurality of operators (i.e., terminals 20 of each operator) and resources corresponding to the respective operators (e.g., the prioritized resources) to another radio apparatus (e.g., the child node or terminal 20). Note that, the information indicating the association between the operators and the time resources may be notified from the parent node to the child node or may be notified from the CU (not illustrated) to each IAB node 30.

For example, each time resource illustrated in FIG. 10 is configured as the prioritized resource for operators A, B, and C for every three resources. Note that, configuration of the prioritized resource is not limited to the example illustrated in FIG. 10. By way of example, the prioritized resources of the respective operators may be configured periodically or non-periodically. Further, the number of prioritized resources may be the same or different among the operators.

In FIG. 10, both the resource configuration of DU 303 and the prioritized operator are configured for each time resource.

IAB node 30 that is the child node or terminal 20 uses each time resource based on the information indicating the association between the prioritized operator and the time resource, which is notified from IAB node 30 that is the parent node. For example, IAB node 30 that is the child node may perform scheduling of terminals 20 of operators based on the prioritized operator per time resource.

Further, similarly to Embodiment 1, IAB node 30 may control configuration related to use of a radio resource (e.g., the prioritized resource) allocated to the first radio apparatus (e.g., terminal 20 of each operator) by the second radio apparatus (e.g., terminal 20 of another operator).

Thus, in the present embodiment, when the IAB is applied in the shared frequency, the configuration of the prioritized operator at each time resource is notified from upstream IAB node 30 to downstream IAB node 30 (or terminal 20).

This notification allows IAB node 30 to identify the prioritized operator at each time resource. In other words, IAB node 30 can identify which operator's prioritized resource each time resource is. Thus, each IAB node 30, for example, can control the use of prioritized or non- prioritized operators in time resources, as in Embodiment 1.

As described above, according to the present embodiment, even when IAB is applied, as in Embodiment 1, the frequency utilization efficiency of the shared frequency can be improved. Hence, according to the present embodiment, the efficiency of frequency sharing technology can be improved.

In the time resource to which "Soft" is configured, IAB node 30 that is the parent node notifies information indicating whether or not the resource with respect to DU 303 is available (e.g., either IA or INA). When notifying the information, IAB node 30 that is the parent node may dynamically notify (i.e., change) information (e.g., PLMN ID) capable of identifying the prioritized operator of the time resource. By this notification, the prioritized operator can be flexibly switched, and thus, the utilization efficiency of the resource can be improved.

The prioritized operator may also be associated with each time resource on a one-to-one basis, for example, by the information (e.g., PLMN ID) capable of identifying the prioritized operator. Alternatively, separately from the resource configuration of DU 303 illustrated in FIG. 10, for example, a start timing of the prioritized resource for each operator and a cycle (or period) may be configured for each operator.

Besides, in the present embodiment, as an example, the case where IAB is applied in the shared frequency has been described. However, the present embodiment may be applied, for example, instead of IAB, to a radio communication system including a relay station (or a relay node) for relaying a signal.

### (Embodiment 3)

In the present embodiment, a case will be described where signals of terminals of the same or different operators are spatially multiplexed in the shared frequency.

Note that, a base station and a terminal according to the present embodiment will be described with reference to FIGS. 5 and 6 because the base station and the terminal have a common basic configuration with base station 10 and terminal 20 according to Embodiment 1.

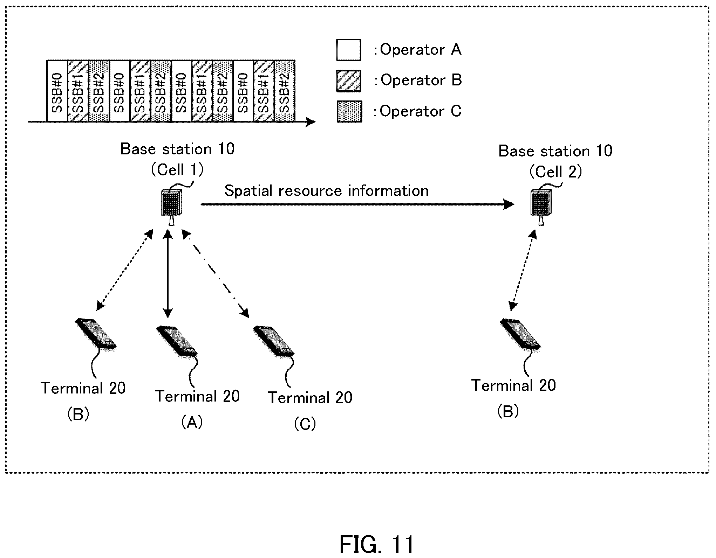

FIG. 11 illustrates an exemplary configuration of a radio communication system according to the present embodiment. The radio communication system illustrated in FIG. 11 includes, for example, a plurality of base stations 10 and a plurality of terminals 20. In FIG. 11, by way of example, operators A, B and C share each base station 10. Terminals 20 corresponding to operators A, B, and C are wirelessly connected (i.e., access) to base station 10.

In addition, as an example, FIG. 11 includes base station 10 forming cell 1 and base station 10 forming cell 2. Further, in FIG. 11, each time resource of the shared frequency is configured as the prioritized resources of operators A, B, and C for every three resources.

Note that, the configuration of the radio communication system illustrated in FIG. 11 is merely an example. The numbers of base stations 10, terminals 20, and operators are not limited to the configuration illustrated in FIG. 11. Further, base station 10 may also be provided for each operator instead of sharing among the operators. In this case, for example, as illustrated in FIG. 2, the time synchronization may be carried out among base stations 10 of the respective operators.

For example, base station 10 of cell 1 (e.g., control section 101) generates spatial resource information relating to a spatial resources (e.g., beam) to be preferentially used in cell 1.

The spatial resource information may indicate, for example, an index for a reference signal (e.g., Synchronization Signal Block (SSB)) corresponding to the beam used in each time resource as illustrated in FIG. 11. In FIG. 11, for example, the reference signal indices corresponding to the beams used (or to be used) in the prioritized resources of operators A, B and C are SSB#0, #1 and #2, respectively.

Base station 10 of cell 1 (e.g., transmission section 103) notifies base station 10 of cell 2 of the spatial resource information. The spatial resource information may be dynamically notified, for example, from base station 10 of cell 1 to base station 10 of cell 2. This notification allows base station 10 of cell 2 to identify a usage status of the beam at each time resource in base station 10 of cell 1.

Further, terminal 20 of cell 2 (e.g., control section 201), for example, measures a signal level (i.e., interference level) from another cell (e.g., cell 1). Terminal 20, based on the measured signal level, generates other cell information indicating information relating a signal that may cause interference from the other cell to cell 2, and transmits the other cell information to base station 10 of cell 2.

For example, the other cell information may include a parameter relating to the spatial resource (e.g., beam) used for a signal with a signal level from another cell above or equal to a threshold value. In FIG. 11, by way of example, the other cell information may include an SSB index corresponding to the beam used for a signal with a signal level from cell 1 above or equal to a threshold value. The other cell information may also be referred to as, for example, a Measurement Report (MR).

Base station 10 of cell 2 (e.g., control section 101) determines a spatial resource (e.g., beam) usable by terminal 20 of cell 2 based on the other cell information of cell 2 and the spatial resource information of cell 1.

As an example, a case will be described where SSB#1 and SSB#2 of cell 1 are indicated in the other cell information reported from terminal 20 of cell 2 to base station 10 of cell 2 in FIG. 11.

In this case, in cell 1, a beam corresponding to SSB#1 (e.g., operator B) and a beam corresponding to SSB#2 (e.g., operator C) may be used. Further, in cell 1, a beam corresponding to SSB#0 (e.g., operator A) may not be used, or the beam corresponding to SSB#0 may be used while not interfering with terminal 20 of cell 2. Base station 10 of cell 2, based on the usage statuses of the beams of cell 1, controls the use of a scheduling resource and the beams with respect to terminal 20 of cell 2, for example, as described below.

For example, with respect to the prioritized resource for operator A, since the beam corresponding to SSB#0 is used in cell 1, in cell 2, at least, scheduling to terminal 20 that receives no interference by SSB#0 of cell 1 can be performed. In addition, here, in the prioritized resource for operator A, the beam corresponding to SSB#0 is unlikely to interfere from cell 1 to terminal 20 of cell 2. Thus, even when SSB#0 is used in cell 1, the same time frequency resource can be used for terminal 20 in cell 2.

Accordingly, base station 10 of cell 2 determines that the scheduling to terminal 20 can be performed in cell 2 in the prioritized resource for operator A. For example, base station 10 of cell 2 may allocate any beam to terminal 20 of cell 2 in the prioritized resource for operator A.

In addition, for example, the beam used by base station 10 of cell 2 for terminal 20 desirably does not interfere with terminal 20 (A) to be scheduled in the prioritized resource for operator A of cell 1. Thus, base station 10 of cell 1 (e.g., transmission section 103) may notify cell 2 of the spatial resource information by including the information of the reference signal index for cell 2 that may interfere with terminal 20 to be scheduled in the time resource, in addition to the information of the reference signal index corresponding to the beam used in each time resource. This notification allows base station 10 of cell 2 to know use of which beam will cause the interference in each resource used in cell 1. For example, base station 10 of cell 2 can control a beam allocation avoiding the use of the beam that may cause the interference.

With these beam allocation, in FIG. 11, base station 10 of cell 2 can allocate, to terminal 20 of cell 2, a beam that does not cause the interference from cell 2 to cell 1, using a resource which uses a beam that does not cause the interference from cell 1 to terminal 20 of cell 2 among the resources used in cell 1. For example, the signal of terminal 20 of cell 2 and the signal of terminal 20 of cell 1 can be spatially multiplexed at the identical time and frequency resources. In other words, in cell 2, even the time resource used in cell 1 can be spatially multiplexed (i.e., scheduling at the identical time or at the identical frequency) by orthogonalizing the interference from cell 2 to cell 1.

In addition, in the beam allocation, base station 10 of cell 2 may control configuration related to the use of the radio resource (e.g., the prioritized resource) allocated to terminals 20 of operators by terminal 20 of another operator, as similar to Embodiment 1.

Thus, in the present embodiment, base station 10 controls parameter configuration (e.g., scheduling resource or beam configuration) of communication using the radio resource by the second radio apparatus (e.g., terminal 20) that accesses base station 10, based on the parameter configuration (e.g., configuring the beam used or to be used) of communication using the radio resource by the first radio apparatus that accesses another base station 10 (e.g., terminal 20).

With this control, for example, since base station 10 can identify the usage status of the spatial resource for another base station 10 (e.g., beam), each base station 10 can allocate the spatial resource unused by the other base station 10 to terminal 20. Thus, for example, a plurality of base stations 10 can spatially multiplex signals of different operators in the shared frequency.

As above, according to the present embodiment, frequency utilization efficiency of the shared spectrum can be improved by spatial multiplexing. Thus, according to the present embodiment, improving the efficiency of frequency sharing technology is possible.

Note that, FIG. 11, as an example, indicates a case where the spatial resource information corresponding to the beam used in cell 1 is notified to base station 10 of cell 2. Similar to FIG. 11, the spatial resource information corresponding to the beam used in cell 2 may be notified to base station 10 of cell 1. This notification allows terminal 20 of cell 1 to use a beam that does not interfere from cell 1 to cell 2 in a resource that does not interfere from cell 2 to terminal 20 of cell 1 among the resources that may be used in cell 2.

Further, in FIG. 11, as an example of the spatial resource information, the information indicating a usage schedule of the beam of a predetermined period has been described. However, the spatial resource information may be any information as long as the information indicates the usage status of the spatial resource in the corresponding base station 10. For example, spatial resource information may indicate the relationship between the prioritized operator and the used beam in each time resource or the used beam in each time resource.

For example, the spatial resource information may be associated with each prioritized operator (e.g., PLMN ID) in each time resource. In one example, information (e.g., reference signal index) corresponding to the beam to be used in the prioritized resource for each operator may be associated with the prioritized operator. For example, in the example illustrated in FIG. 11, the beam to be used (e.g., { SSB#0, SSB#0, SSB#0, SSB#0, ...} may be associated with the prioritized resources of operator A (e.g., PLMN ID#A). In this case, the information indicating the association between the prioritized operator and the time resource may be separately notified to each base station 10 or terminal 20. This association, for example, allows different base stations 10 to share the usage status of the spatial resource in the same operator (e.g., operator A). For example, when terminals 20 belonging to the same operator are individually connected to different base stations 10, each base station 10 can easily perform spatially multiplexing of the signals of terminals 20 using different beams.

Further, the present embodiment may be applied to, for example, IAB described in Embodiment 2. For example, the same operation as that of the present embodiment may be applied to a radio communication system including IAB nodes 30 (see, for example, FIG. 8) forming cell 1 and cell 2, respectively, and terminal 20, instead of the radio communication system illustrated in FIG. 11.

In the present embodiment, as an example, a case has been described where the signal of the prioritized operator and the signal of another operator are spatially multiplexed in the prioritized resource for each operator (e.g., time resource). However, multiplexing of signals among operators is not limited to the spatial multiplexing. For example, at the prioritized resource for each operator (e.g., time resource), the signal of the prioritized operator and the signal of the other operator may be frequency multiplexed (Frequency Division Multiplexing (FDM)).

In the present embodiment, as an example, a case where the SSB index is included in the spatial resource information has been described. However, the parameter included in the spatial resource information is not limited to the SSB index. For example, the parameter included in the spatial resource information may be an index for the used beam or an index for another reference signal (e.g., Sounding Reference Signal (SRS)). The spatial resource information may also be a parameter corresponding to the beam not used in base station 10, instead of a parameter corresponding to beam used in base station 10.

Base station 10 may also be provided for each operator instead of sharing among the operators. In this case, for example, as illustrated in FIG. 2, the time synchronization may be carried out among base stations 10 of the respective operators.

The embodiments of the present invention have been described above.

Note that, at least two of above-described embodiments 1, 2, and 3 may be combined with one another.

### (Hardware Configuration)

Note that the block diagrams used to describe the embodiments illustrate blocks on the basis of functions. These functional blocks (constituent sections) are implemented by any combination of at least one of hardware and software. A means for implementing the functional blocks is not particularly limited. That is, the functional blocks may be implemented by using one physically or logically coupled apparatus. Two or more physically or logically separated apparatuses may be directly or indirectly (for example, using a wire, wirelessly, or the like) connected, and the plurality of apparatuses may implement the functional blocks. The functional blocks may be implemented by combining software with one device or a plurality of devices described above.

The functions include, for example, determining, deciding, judging, computing, calculating, processing, deriving, investigating, looking up, ascertaining, receiving, transmitting, outputting, accessing, resolving, selecting, choosing, establishing, comparing, assuming, expecting, deeming, broadcasting, notifying, communicating, forwarding, configuring, reconfiguring, allocating/mapping, assigning; however, the functions are not limited thereto. For example, the functional block (the constituent section) for transmitting is called a transmitting unit or a transmitter. For all of these, as described above, the implementation method is not particularly limited.

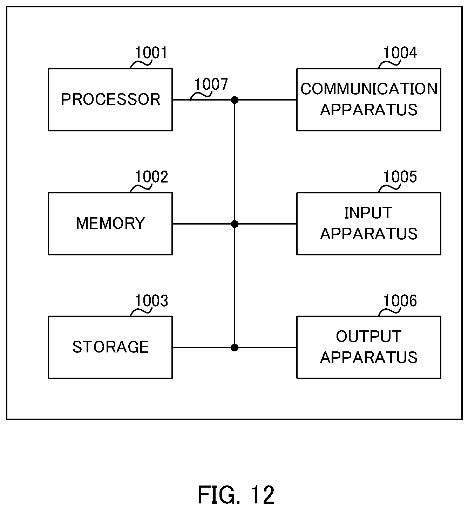

For example, the base station, the user terminal, and the like according to an embodiment of the present disclosure may function as computers for executing processing of the radio communication method of the present disclosure. FIG. 12 illustrates an exemplary hardware configuration of base station 10, terminal 20, and IAB node 30 according to an embodiment of the present disclosure. Each of the above-described base station 10, terminal 20, and IAB node 30 may be physically configured as a computer device including processor 1001, memory 1002, storage 1003, communication device 1004, input device 1005, output device 1006, bus 1007, and the like.

Note that, in the following description, the term "apparatus" can be replaced with the rems such as a circuit, a device, a unit. The hardware configuration of base station 10, terminal 20, and IAB node 30 may include one or more of each device illustrated in the drawing, or may not include a part of the devices.

Each function of base station 10, terminal 20, and IAB node 30 is implemented by, for example, loading predetermined software (program) on hardware such as processor 1001 and memory 1002 so that processor 1001 performs computation, controls communication by communication device 1004, and controls at least one of reading and writing of data in memory 1002 and storage 1003.

Processor 1001, for example, operates an operating system to control the entire computer. Processor 1001 may be configured of a Central Processing Unit (CPU) including an interface with a peripheral device, a control device, a computing device, a register, and the like. For example, above-described control sections 101, 201, 301, and the like may be implemented by processor 1001.

In addition, processor 1001 reads out a program (program code), a software module, data, and the like from at least one of storage 1003 and communication device 1004 to memory 1002 and executes various processing according to the read programs. As the program, a program is used which causes a computer to execute at least a part of the operations described in the above-described embodiments. For example, respective control sections 101, 201, and 301 of base station 10, terminal 20, and IAB node 30 may be stored in memory 1002 and implemented by a control program that operates in processor 1001, and another functional block may be similarly implemented. Although the above-mentioned various processing is described as being executed by one processor 1001, the processing may be simultaneously or sequentially executed by two or more processors 1001. Processor 1001 may be implemented with one or more chips. Note that the program may be transmitted from a network via an electric communication line.

Memory 1002 is a computer readable recording medium and may be configured of, for example, at least one of a Read-Only Memory (ROM), an Erasable Programmable ROM (EPROM), an Electrically Erasable Programmable ROM (EEPROM), a Random Access Memory (RAM), and the like. Memory 1002 may be referred to as a register, a cache, a main memory (main storage device), and the like. Memory 1002 can store programs (program codes), software modules, and the like which can be executed to implement the radio communication method according to an embodiment of the present disclosure.

Storage 1003 is a computer readable recording medium and may be configured of, for example, at least one of an optical disk such as a Compact Disc ROM (CD-ROM), a hard disk drive, a flexible disk, a magneto-optical disk (e.g., a compact disk, a digital versatile disk, a Blu-ray (registered trademark) disk), a smart card, a flash memory (e.g., a card, a stick, a key drive), a floppy (registered trademark) disk, a magnetic strip, and the like. Storage 1003 may be referred to as an auxiliary storage device. The above-mentioned storage medium may be, for example, a database, a server, or any other suitable medium including at least one of memory 1002 and storage 1003.

Communication device 1004 is hardware (transmission and reception device) for performing communication between computers via at least one of wired and wireless networks and also referred to as, for example, a network device, a network controller, a network card, a communication module, and the like. Communication device 1004, for example, may be configured to include a high frequency switch, a duplexer, a filter, frequency synthesizer, and the like so as to implement at least one of a Frequency Division Duplex (FDD) and a Time Division Duplex (TDD). For example, above-mentioned reception sections 102 and 202, transmission section 103, 203, MT 302, DU303, and the like may be implemented by communication device 1004.

Input device 1005 is an input device (e.g., keyboard, mouse, microphone, switch, button, sensor) for receiving input from outside. Output device 1006 is an output device (e.g., display, speaker, LED lamp) for performing output toward outside. Note that, input device 1005 and output device 1006 may have an integrated configuration (e.g., touchscreen).

In addition, the devices, such as processor 1001 and memory 1002, are connected by bus 1007 for communicating information. Bus 1007 may be configured of a single bus or different buses among the devices.

Furthermore, base station 10, terminal 20, and IAB node 30 may be configured to include hardware such as a microprocessor, a Digital Signal Processor (DSP), an Application Specific Integrated Circuit (ASIC), a Programmable Logic Device (PLD), an Field Programmable Gate Array (FPGA), and a part or all of the functional blocks may be implemented by the hardware. For example, processor 1001 may be implemented by using at least one of these hardware components.

### (Notification of Information, Signaling)

The notification of information is not limited to the aspects/embodiments described in the present disclosure, and the information may be notified by using another method. For example, the notification of information may be carried out by one or a combination of physical layer signaling (e.g., Downlink Control Information (DCI) and Uplink Control Information (UCI)), higher layer signaling (for example, Radio Resource Control (RRC) signaling, Medium Access Control (MAC) signaling, broadcast information (Master Information Block (MIB), and System Information Block (SIB))), and other signals. In addition, the RRC signaling may be referred to as an RRC message and may be, for example, an RRC Connection Setup message, an RRC Connection Reconfiguration message, or the like.

### (Adaptive System)

Each aspect/embodiment described in the present disclosure may be applied to at least one of Long Term Evolution (LTE), LTE-Advanced (LTE-A), Super 3G, IMT-Advanced, 4th generation mobile communication system (4G), 5th generation mobile communication system (5G), Future Proportion Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using another appropriate system and a next generation system extended based on these. In addition, the aspect/embodiment may be applied to a combination of a plurality of systems (for example, a combination of at least one of LTE and LTE-A and 5G).

### (Processing Procedure and the like)

The order of the processing procedures, the sequences, the flowcharts, and the like of the aspects and embodiments described in the present disclosure may be changed as long as no contradiction occurs. For example, with respect to the methods described in the present disclosure, elements of various steps are presented in exemplary orders, while the methods are not limited to the presented specific orders.

### (Operation of Base Station)

Specific operations which are described in the present disclosure as being performed by the base station may be performed by its upper node in some cases. In a network constituted by one network node or a plurality of network nodes including the base station, various operations performed for communication with the terminal can be obviously performed by the base station and/or a network node other than the base station (examples include, but not limited to, a Mobility Management Entity (MME) or a Serving Gateway (S-GW)). Although the case having one network node other than the base station is illustrated above, a plurality of other network nodes may be combined (for example, MME and S-GW).

### (Direction of Input and Output)

The information, the signals, and the like may be output from a higher layer (or lower layer) to a lower layer (or higher layer). The information, the signals, and the like may be input and output through a plurality of network nodes.

### (Handling of Input and Output Information and the like)

The input and output information and the like may be stored in a specific place (e.g., memory) or may be managed by a management table. The input and output information and the like may be overwritten, updated, or additionally written. The output information and the like may be deleted. The input information and the like may be transmitted to another apparatus.

### (Determination Method)

The determination may be performed based on a value expressed by one bit (0 or 1), based on a Boolean value (true or false), or based on a numerical comparison (for example, comparison with a predetermined value).

### (Software)

The software, regardless of whether referred to as software, firmware, middleware, a microcode, a hardware description language, or by other names, should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, the software, the instruction, information, and the like may be transmitted and received through a transmission medium. For example, when the software is transmitted from a website, a server, or another remote source by using a wired technique (e.g., coaxial cable, optical fiber cable, twisted pair, and Digital Subscriber Line (DSL) and/or wireless technique (e.g., infrared ray, microwave), at least one of the wired technique or the wireless technique is included in the definition of the transmission medium.

### (Information and Signal)

The information, the signals, and the like described in the present disclosure may be represented by using any of various different techniques. For example, data, instructions, commands, information, signals, bits, symbols, chips, and the like, which can be mentioned throughout the entire description may be expressed by one or any combination of voltage, current, electromagnetic waves, magnetic fields or magnetic particles, optical fields or photons.

Note that, the terms described in the present disclosure and the terms necessary to understand the present disclosure may be replaced with terms with the same or similar meaning. For example, at least one of the channel and the symbol may be a signal (signaling). Further, the signal may be a message. A Component Carrier (CC) may be referred to as a carrier frequency, a cell, a frequency carrier, or the like.

### ("System" and "Network")

The terms "system" and "network" used in the present disclosure are used interchangeably.

### (Names of Parameter and Channel)

The information, the parameters, and the like described in the present disclosure may be expressed by absolute values, by values relative to predetermined values, or by other corresponding information. For example, radio resources may be indicated by indices.

The names used for the above-mentioned parameters are not limited names in any respect. Furthermore, numerical formulae and the like using the parameters may be different from those explicitly disclosed in the present disclosure. Various channels (e.g., PUCCH and PDCCH) and information elements can be identified by any suitable names, and various names assigned to these various channels and information elements are not limited names in any respect.

### (Base Station)

In the present disclosure, the terms such as a "Base Station (BS)," a "Radio Base Station," a "Fixed Station," "Node B," "eNode B (eNB)," "gNode B (gNB)," a "Access point," a "transmission point," a "reception point," a "transmission/reception point," a "cell," a "sector," a "cell group," a "carrier," a "component carrier" can be used interchangeably. The base station may be referred to by the terms such as a macro cell, a small cell, a femtocell, a picocell.

The Base Station can accommodate one cell or a plurality of (e.g., three) cells. When the base station accommodates a plurality of cells, the entire coverage area of the base station can be divided into a plurality of smaller areas, and each of the smaller areas can provide a communication service based on a base station subsystem (for example, small base station for indoor use, i.e., a remote radio head (RRH)). The term "cell" or "sector" denotes a part or all of the coverage area of at least one of the base station or the base station subsystem which perform the communication service in the coverage.

### (Terminal)

In the present disclosure, the terms such as "Mobile Station (MS)," "user terminal (user terminal)," "User equipment (UE)," and "terminal" can be used interchangeably.

The mobile station may be referred to, by those skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by other suitable terms.

### (Base station/Mobile Station)

At least one of the base station and the mobile station may be referred to as a transmitting device, a receiving device, a communication device, or the like. At least one of the base station and the mobile station may be a device mounted on a moving body, the moving body itself, or the like. The moving body may be a vehicle (e.g., car, airplane), a moving body that moves unmanned (e.g., drone, automatically driven vehicle), or a robot (manned type or unmanned type). Note that, at least one of the base station and the mobile station also includes a device that does not necessarily move during a communication operation. For example, at least one of the base station and the mobile station may be an Internet of Things (IoT) device such as a sensor.

The base station in the present disclosure may be replaced with the user terminal. For example, each aspect/embodiment of the present disclosure may be applied to a configuration in which the communication between the base station and the user terminal is replaced with communication among a plurality of user terminals (may be referred to as Device-to-Device (D2D), Vehicle-to-Everything (V2X), for example). **In** this case, **In** this case, user terminal 20 may be configured to have the functions included in above-mentioned base station 10. **In** addition, the terms such as "uplink" and "downlink" may be replaced with terms corresponding to inter-terminal communication (e.g., "side"). For example, an uplink channel, a downlink channel may be replaced with a side channel.

Similarly, the user terminal in the present disclosure may be replaced with the base station. In this case, base station 10 may be configured to have the functions included in above-mentioned user terminal 20.

### (Meaning and Interpretation of Terms)

The term "determining" used in the present disclosure may include a wide variety of actions. For example, "determining" may be regarded as, for example, judging, calculating, computing, processing, deriving, investigating, looking up/search/inquiry (e.g., looking up in a table, a database or another data structure), and/or ascertaining. In addition, "determining" may be regarded as, for example, receiving (e.g., receiving information), transmitting (e.g., transmitting information), input, output, and/or accessing (e.g., accessing data in a memory). Furthermore, "determining" may be regarded as, for example, resolving, selecting, choosing, establishing, and/or comparing. That is, "determining" may include the fact "determining" some action. Besides, "determining" may be regarded as, for example, assuming, expecting, and/or considering.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" can be replaced with a term "accessed". When the terms are used in the present disclosure, two elements can be considered to be "connected" or "coupled" to each other by using at least one of electrical wires, cables, and printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard.

The description "based on" used in the present disclosure does not mean "based only on," unless otherwise specifically stated. In other words, the description "based on" means both of "based only on" and "based at least on."

Any reference to elements using names such as "first" and "second," as used in the present disclosure does not generally limit the amount or order of these elements. The names can be used in the present disclosure as a convenient method to distinguish two or more elements. Accordingly, the reference to the first and second elements does not imply that only two elements can be adopted, or that the first element must precede the second element in some way.

The "section" in the configuration of each apparatus may be replaced with "means," "circuit," "device," or the like.

The terms "include," "including," and modifications of these terms are intended to be inclusive just like the term "comprising," when the terms are used in the present disclosure. Furthermore, the term "or" used in the present disclosure is not intended to be an exclusive or.

The radio frame may be constituted by one frame or a plurality of frames in the time domain. The one frame or each of the plurality of frames may be called a subframe in the time domain. The subframe may be further constituted by one slot or a plurality of slots in the time domain. A subframe may be a fixed time duration (for example, 1 ms) not dependent on the numerology.

The numerology may be a communication parameter to be applied to at least one of transmission or reception of a signal or a channel. The numerology may represent, for example, at least one of a SubCarrier Spacing (SCS), a bandwidth, a symbol length, a cyclic prefix length, a Transmission Time Interval (TTI), a symbol number per TTI, a radio frame configuration, specific filtering processing performed by a transceiver in a frequency domain, specific windowing processing performed by a transceiver in a time domain, and the like.

The slot may be further constituted by one symbol or a plurality of symbols (Orthogonal Frequency Division Multiplexing (OFDM) symbol, Single Carrier-Frequency Division Multiple Access (SC-FDMA) symbol or the like) in the time domain. The slot may be a time unit based on the numerology.

The slot may include a plurality of minislots. Each minislot may be configured of one or more symbols in a time domain. The minislot may also be referred to as a sub slot. A minislot may be configured of fewer symbols than those of the slot. The PDSCH (or PUSCH) transmitted in a unit of time that is greater than a minislot may be referred to as PDSCH (or PUSCH) mapping type A. The PDSCH (or PUSCH) transmitted using a minislot may be referred to as PDSCH (or PUSCH) mapping type B.

The radio frame, the subframe, the slot, the minislot, and the symbol indicate time units in transmitting signals. The radio frame, the subframe, the slot, the minislot, and the symbol may be called by other corresponding names. For example, one subframe may be referred to as a "Transmission Time Interval (TTI)," or a number of contiguous subframes may be referred to as the "TTI," or one slot or one minislot may be referred to as the "TTI." That is, at least one of the subframe and the TTI may be a subframe (1 ms) in existing LTE, may be a period shorter than 1 ms (for example, 1 to 13 symbols), or may be a period longer than 1 ms. Note that, a unit indicating the TTI may be referred to as the "slot," the "minislot," or the like instead of the "subframe."

Here, the TTI refers to, for example, the minimum time unit of scheduling in radio communication. In one example, in the LTE system, the base station performs scheduling for allocating radio resources (such as frequency bandwidth and transmission power, which can be used in each user terminal) in units of TTIs to each user terminal. Note that, a definition of the TTI is not limited to this.

The TTI may be a transmission time unit such as a channel coded data packet (a transport block), a code block, a codeword, or may be a processing unit for scheduling, link adaptation, or the like. Note that, when the TTI is provided, a time interval (e.g., the number of symbols) onto which the transport block, the code block, or the codeword is actually mapped may be shorter than the TTI.

Note that, when one slot or one minislot is referred to as the TTI, one or more TTIs (i.e., one or more slots or one or more minislots) may be the minimum time unit for scheduling. In addition, the number of slots (the number of minislots) constituting the minimum time unit for the scheduling may be controlled.

A TTI with a time length of 1 ms may be referred to as an ordinary TTI (TTI in LTE Rel. 8-12), a normal TTI, a long TTI, an ordinary subframe, a normal subframe, a long subframe, a slot, or the like. A TTI that is shorter than the ordinary TTI may be referred to as a shortened TTI, a short TTI, a partial TTI (partial TTI or fractional TTI), a shortened subframe, a short subframe, a minislot, a sub slot, a slot, or the like.

Note that the long TTI (e.g., normal TTI, subframe, or the like) may be replaced with a TTI with a time length exceeding 1 ms, and the short TTI (e.g., shortened TTI, or the like) may be replaced with a TTI with a TTI length shorter than the TTI length of the long TTI and longer than or equal to 1 ms.

A resource block (RB) is a unit of resource allocation in the time domain and the frequency domain, and may include one or a plurality of contiguous subcarriers in the frequency domain. The number of subcarriers included in the RB may be the same irrespective of numerology, and may be 12, for example. The number of subcarriers included in the RB may be determined based on the numerology.

Also, the time domain of the RB may include one or more symbols, and may be one slot, one minislot, one subframe or one TTI in length. One TTI, one subframe, and the like each may be composed of one or more resource blocks.

Note that one or more RBs may be referred to as a "Physical Resource Block (PRB (Physical RB))," a "Sub-Carrier Group (SCG)," a "Resource Element Group (REG)," a "PRB pair," an "RB pair," and the like.

Furthermore, the resource block may be composed of one or more resource elements (REs). For example, one RE may be a radio resource field of one subcarrier and one symbol.

A Bandwidth Part (BWP) (which may also be referred to as a partial bandwidth or the like) may represent, in a certain carrier, a subset of contiguous common RB (common resource blocks) for a certain numerology. Here, the common RB may be specified by an index for the RB, which is based on a common reference point of the carrier. The PRB may be defined in a BWP, and may be numbered within the BWP.

The BWP may include a BWP for UL (UL BWP) and a BWP for DL (DL BWP). One or more BWPs may be configured in one carrier for a UE.

At least one of the configured BWPs may be active, and the UE may not expect to transmit or receive a predetermined signal/channel outside the active BWP. Note that, the terms such as "cell," "carrier," in the present disclosure may be replaced with "BWP."

The structures of the radio frame, the subframe, the slot, the minislot, the symbol, and the like are illustrative only. For example, the configurations relating to the following can be changed in various ways: the number of subframes included in the radio frame, the number of slots per subframe or radio frame, the number of minislots included in the slot, the numbers of symbols and RBs included in the slot or the minislot, and the number of subcarriers included in the RB, the number of symbols in the TTI, the symbol length, the length of cyclic prefix (CP), and the like.

In the present disclosure, in a case where articles such as "a," "an," and "the" in English, for example, are added by translation, the present disclosure may include that the nouns following these articles have the same meaning as used in the plural.

### (Variations and the like of Aspects)

The aspects and embodiments described in the present disclosure may be independently used, may be used in combination, or may be switched and used along the execution.

While the present disclosure has been described in detail, it is obvious to those skilled in the art that the present disclosure is not limited to the embodiments described in the present disclosure. Modifications and variations of the aspects of the present disclosure can be made without departing from the the scope of the present disclosure as defined by the appended claims. Therefore, the description of the present disclosure is intended for exemplary description and does not limit the present disclosure in any sense.

### Industrial Applicability

An aspect of the present invention is useful for a radio communication system.

### Reference Signs List

10 Base Station
20 Terminal
30 IAB node
101, 201, 301 Control section
102, 202 Reception section
103, 203 Transmission section
302 MT
303 DU

## Claims

1. A terminal (20) performing a communication using a shared spectrum, comprising:
a reception section (202) that receives downlink control information common in a group of terminals; and
a control section (201) that switches a search space set to be monitored by the terminal, based on the downlink control information,
**characterized in that**
the reception section (202) receives a higher-layer parameter indicating the search space set; and
the downlink control information indicates a presence or absence of monitoring in the search space set.

2. The terminal (20) according to claim 1, wherein
the reception section (202) receives the downlink control information scrambled by a Radio Network Temporary Identifier, RNTI, corresponding to the group of the terminals.

3. A base station (10) performing a communication using a shared spectrum, comprising:
a control section (101) that generates information for controlling switching of a search space set to be monitored by a terminal; and
a transmission section (103) that transmits the information by downlink control information common in a group of terminals,
**characterized in that**
the transmission section (103) transmits a higher-layer parameter indicating the search space set; and
the downlink control information indicates a presence or absence of monitoring in the search space set.

4. A communication method using a shared spectrum, comprising:
receiving a higher-layer parameter indicating a search space set;
receiving downlink control information common in a group of terminals; and
switching the search space set to be monitored by a terminal, based on the downlink control information,
wherein
the downlink control information indicates a presence or absence of monitoring in the search space set.

5. A system performing a communication using a shared spectrum, comprising:
a terminal (20); and
a base station (10),
wherein, the base station (10) includes,
a control section (101) that generates information for controlling switching of a search space set to be monitored by the terminal, and
a transmission section (103) that transmits the information by downlink control information common in a group of terminals, and
wherein, the terminal (20) includes,
a reception section (202) that receives the downlink control information, and
a control section (201) that switches a search space set to be monitored by the terminal, based on the downlink control information,
**characterized in that**
the terminal (20) receives a higher-layer parameter indicating the search space set; and
the downlink control information indicates a presence or absence of monitoring in the search space set.

## Patentansprüche

1. Endgerät (20), das eine Kommunikation unter Verwendung eines gemeinsam genutzten Spektrums durchführt, umfassend:
einen Empfangsabschnitt (202), der Abwärtsverbindungssteuerinformationen empfängt, die einer Gruppe von Endgeräten gemeinsam sind; und
einen Steuerabschnitt (201), der einen von dem Endgerät zu überwachenden Suchraum-Satz, auf der Grundlage der Abwärtsverbindungssteuerinformationen, umschaltet,
**dadurch gekennzeichnet, dass**
der Empfangsabschnitt (202) einen Parameter einer höheren Schicht empfängt, der den Suchraum-Satz angibt; und
die Abwärtsverbindungssteuerinformationen ein Vorhandensein oder Fehlen einer Überwachung in dem Suchraum-Satz angeben.

2. Endgerät (20) nach Anspruch 1, wobei
der Empfangsabschnitt (202) die Abwärtsverbindungssteuerinformationen empfängt, die durch eine temporäre Funknetz-Kennung, RNTI, verschlüsselt sind, die der Gruppe von Endgeräten entspricht.

3. Basisstation (10), die eine Kommunikation unter Verwendung eines gemeinsam genutzten Spektrums durchführt, umfassend:
einen Steuerabschnitt (101), der Informationen zur Steuerung der Umschaltung eines Suchraum-Satzes erzeugt, der von einem Endgerät zu überwachen ist; und
einen Übertragungsabschnitt (103), der die Informationen durch Abwärtsverbindungssteuerinformationen überträgt, die in einer Gruppe von Endgeräten gemeinsam sind,
**dadurch gekennzeichnet, dass**
der Übertragungsabschnitt (103) einen Parameter einer höheren Schicht überträgt, der den Suchraum-Satz angibt; und
die Abwärtsverbindungssteuerinformationen ein Vorhandensein oder Fehlen einer Überwachung in dem Suchraum-Satz angeben.

4. Kommunikationsverfahren unter Verwendung eines gemeinsam genutzten Spektrums, umfassend:
Empfangen eines Parameters einer höheren Schicht, der einen Suchraum-Satz angibt;
Empfangen von Abwärtsverbindungssteuerinformationen, die in einer Gruppe von Endgeräten gemeinsam sind; und
Umschalten des von einem Endgerät zu überwachenden Suchraum-Satzes auf der Grundlage der Abwärtsverbindungssteuerinformationen,
wobei die Abwärtsverbindungssteuerinformationen ein Vorhandensein oder Fehlen einer Überwachung in dem Suchraum-Satz angeben.

5. System, das eine Kommunikation unter Verwendung eines gemeinsam genutzten Spektrums durchführt, umfassend:
ein Endgerät (20); und
eine Basisstation (10),
wobei die Basisstation (10) Folgendes einschließt,
einen Steuerabschnitt (101), der Informationen zur Steuerung der Umschaltung eines von dem Endgerät zu überwachenden Suchraum-Satzes erzeugt, und
einen Übertragungsabschnitt (103), der die Informationen durch Abwärtsverbindungssteuerinformationen überträgt, die in einer Gruppe von Endgeräten gemeinsam sind, und
wobei das Endgerät (20) Folgendes einschließt,
einen Empfangsabschnitt (202), der die Abwärtsverbindungssteuerinformationen empfängt, und
einen Steuerabschnitt (201), der einen von dem Endgerät zu überwachenden Suchraum-Satz, auf der Grundlage der Abwärtsverbindungssteuerinformationen, umschaltet,
**dadurch gekennzeichnet, dass**
das Endgerät (20) einen Parameter einer höheren Schicht empfängt, der den Suchraum-Satz angibt; und
die Abwärtsverbindungssteuerinformationen ein Vorhandensein oder Fehlen einer Überwachung in dem Suchraum-Satz angeben.

## Revendications

1. Terminal (20) effectuant une communication en utilisant un spectre partagé, comprenant :
une section de réception (202) qui reçoit des informations de commande de liaison descendante communes à un groupe de terminaux ; et
une section de commande (201) qui commute un ensemble d'espaces de recherche devant être surveillé par le terminal, sur la base des informations de commande de liaison descendante,
**caractérisé en ce que**
la section de réception (202) reçoit un paramètre de couche supérieure indiquant l'ensemble d'espaces de recherche ; et
les informations de commande de liaison descendante indiquent la présence ou l'absence de surveillance dans l'ensemble d'espaces de recherche.

2. Terminal (20) selon la revendication 1, dans lequel
la section de réception (202) reçoit les informations de commande de liaison descendante brouillées par un identifiant temporaire de réseau radio, RNTI, correspondant au groupe des terminaux.

3. Station de base (10) effectuant une communication en utilisant un spectre partagé, comprenant :
une section de commande (101) qui génère des informations pour commander la commutation d'un ensemble d'espaces de recherche devant être surveillé par un terminal ; et
une section de transmission (103) qui transmet les informations au moyen d'informations de commande de liaison descendante communes à un groupe de terminaux,
**caractérisée en ce que**
la section de transmission (103) transmet un paramètre de couche supérieure indiquant l'ensemble d'espaces de recherche ; et
les informations de commande de liaison descendante indiquent la présence ou l'absence de surveillance dans l'ensemble d'espaces de recherche.

4. Procédé de communication utilisant un spectre partagé, comprenant :
la réception d'un paramètre de couche supérieure indiquant un ensemble d'espaces de recherche ;
la réception d'informations de commande de liaison descendante communes à un groupe de terminaux ; et
la commutation de l'ensemble d'espaces de recherche devant être surveillé par un terminal, sur la base des informations de commande de liaison descendante,
dans lequel les informations de commande de liaison descendante indiquent la présence ou l'absence de surveillance dans l'ensemble d'espaces de recherche.

5. Système effectuant une communication en utilisant un spectre partagé, comprenant :
un terminal (20) ; et
une station de base (10),
dans lequel la station de base (10) inclut
une section de commande (101) qui génère des informations pour commander la commutation d'un ensemble d'espaces de recherche devant être surveillé par le terminal, et
une section de transmission (103) qui transmet les informations au moyen d'informations de commande de liaison descendante communes à un groupe de terminaux, et
dans lequel le terminal (20) inclut
une section de réception (202) qui reçoit les informations de commande de liaison descendante, et
une section de commande (201) qui commute un ensemble d'espaces de recherche devant être surveillé par le terminal, sur la base des informations de commande de liaison descendante,
**caractérisé en ce que**
le terminal (20) reçoit un paramètre de couche supérieure indiquant l'ensemble d'espaces de recherche ; et
les informations de commande de liaison descendante indiquent la présence ou l'absence de surveillance dans l'ensemble d'espaces de recherche.
